# DEMANDE DE BREVET EUROPEEN

(11) **EP 1 798 079 A1**
(43) Date de publication de la demande: **20.06.2007**
(21) Numéro de dépôt: 06370038.9
(22) Date de dépôt: 14.12.2006
(51) Int. Cl.: B60D 1/30

(54) **Système d'attelage articulé antilacet**

(30) Priorité: 19.12.2005 FR 0512883
(71) Demandeur: Woestelandt, Emile, 59370 Mons-En-Baroeul (FR)
(72) Inventeur: Woestelandt, Emile, 59370 Mons-En-Baroeul (FR)

(57) **Abrégé**

1°-Système d'attelage anti-lacet articulé, caractérisé en ce qu'il comprend une partie mobile constituée par un mécanisme, et une partie fixe constituée par une structure de support
ledit mécanisme comportant
un bras d'attelage (2)
un crochet d'attelage (3)
un chariot (12)
des engrenages (17, 18, 19)
- une crémaillère (23)
un fléau (27) constitué d'une barre plate positionnée sous le véhicule tracteur selon son axe médian et.longitudinal ,
2°-Système selon la revendication n°1, caractérisé en ce que la structure de support est constituée par un rectangle horizontal placé transversalement, destiné au coulissement du chariot (12), et constitué par des glissières (14) et (16) à ouverture interieure et des entretoises (22), ledit rectangle comportant des éléments de fixation au chassis du véhicule tracteur, la structure de support étant également constituée par la glissière (11)

## Description

La présente invention concerne un dispositif destiné à supprimer un phénomène couramment désigné "mise-en-lacet" en matière de remorquage. Il s'agit d'un mouvement oscillant d'une remorque d'un côté à l'autre de la trajectoire d'un attelage constitué par un véhicule tracteur et une remorque. Ce phénomène est bien connu comme étant dù au porte-à-faux arrière du véhicule tracteur, entre le train arrière et le crochet d'attelage. Il a pour effet de projeter la remorque du côté inverse du virage lors de son redressement, avec effet cumulatif et progressif. Ceci aboutit au renversement inexorable de la remorque sous l'effet conjugué du ripage des roues de la remorque et la position élevée du centre de gravté de la remoque. Cette association provoque la projection du haut de la remorque d'un côté alors que l'adhérence des pneus la retient de l'autre. Ce dispositif, à titre de produit industriel nouveau est destiné à équiper tout véhicule tracteur pour tracter une remorque dans toutes ses variétés Il existe deux groupes de dispositifs visant au même objectif, le premier groupe se contente de freiner le phénomène sans en démonter le processus, le second par contre en élimine la cause en transférant virtuellement le point d'articulation de l'attelage au milieu de l'axe reliant les roues arrières du véhicule tracteur. Il existe divers spécimens fondés sur ce principe mais de réalisation différente. Plusieurs sont capables en outre d'en corriger l'inconvénient majeur de déport de la remorque du coté du virage de l'attelage avec risque d'accrochage dans les grands virages (Br.n°9405342 et 1022165A1) Ce principe est appliqué grâce à deux bras disposés en trapèze isocèle entre le tracteur et la remorque et articulés avec la petite base antérieure de ce trapèze dont la déformation dissocie l'arrière du tracteur, de la remorque; afin d'éviter le déport de la remorque la petite base est rétractile de façon à transformer le trapèze en triangle en fonction de l'amplitude du virage, étant bien entendu que cette amplitude est rigoureusement et inversement proportionnelle à la vitesse et que le lacet ne survient pas à faible vitesse. Tous ces dispositifs, pour être d'une efficacité totale, présentent néanmoins une contre partie, ils sont complexes et encombrants et doivent bénéficier de l'agrément des constructeurs de véhicules tracteurs et de remorques

La présente invention appartient à ce groupe d'anti-lacets mais se comporte comme un accessoire libéré donc du contrôle des constructeurs. Son mécanisme est original et inapparent ,et son encombrement est nul car il est fixé sous l'arrière du véhicule tracteur.. Il se présente comme un coffret contenant à l'abri de la poussière et de l'eau un mécanisme capable de déplacer le crochet d'attelage d'un côté ou de l'autre pendant la première partie du virage pour reprendre sa position initiale durant la seconde partie de ce virage. Il est bien entendu que seule la première partie du virage est compatible avec une vitesse élevée et la seconde avec des manoeuvres serrées impliquant des angles de virage importants, une vitesse réduite et donc aucun risque du lacet à grande vitesse. Ainsi sont supprimés toute amorce de lacet à grande vitesse et tout risque d'accrochage en cas de manoeuvre ou de virage étroit.

### DESCRIPTION

Cet anti-lacet comporte à titre d'exemple non limitatif ni exclusif
A- Une partie mobile constituée par le mécanisme
B- Une partie fixe constituée par une structure de support

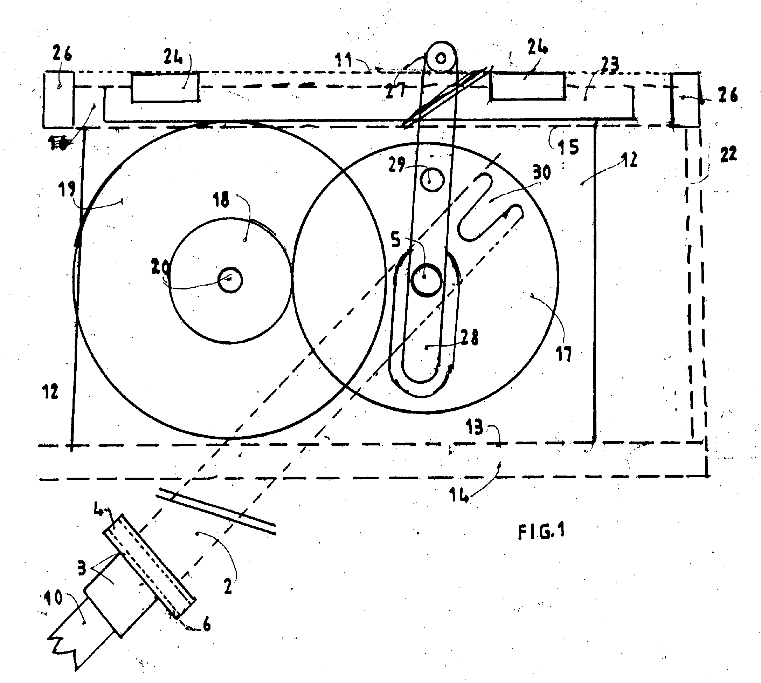

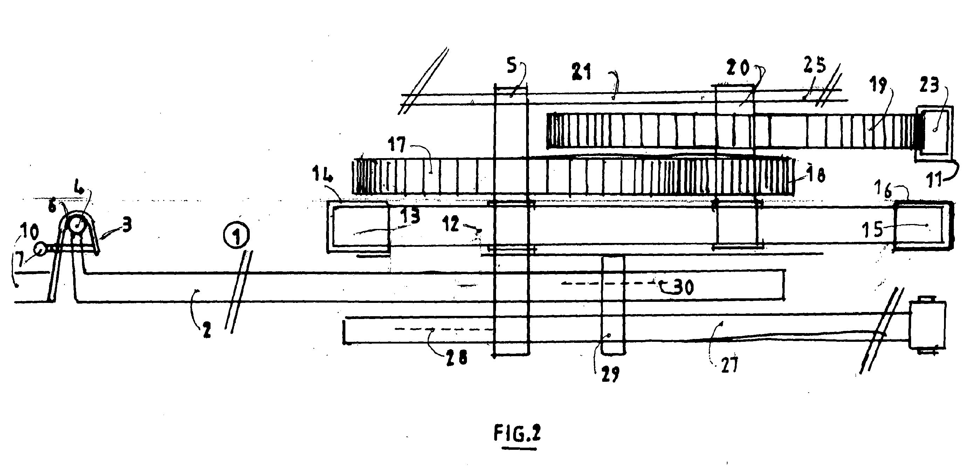

Le mécanisme comporte
1 °- Un système d'accouplement (1) comportant un bras (2) constitué de préférence par une barre plate horizontale terminée d'une part en arrière par le crochet d'attelage (3) et d'autre part en avant par un axe vertical (5) Cedit crochet. est constitué par un élément vertical supportant un axe (4) transversal et horizontal constituant sa partie mâle sur lequel s'appuie sa partie femelle (6) conformée en gouttière renversée et prolongée en bas par un dispositif de verrouillage (7) plus ou moins sofistiqué . Ainsi il apparait que le crocher d'attelage est capable de pivoter dans le sens vertical mais reste rigide latéralement La partie (6) dépend d'un barreau coulissant (10) de la remorque sur lequel elle pivote. Le bras (2) de prolonge en avant de l'axe (5) de façon à pouvoir présenter une échancrure (30) en forme de glissière évasée à son extrémité.
2°- Un chariot (12) qui est constitué par une plaque horizontale et transversale coulisssant par son bord postérieur (13) dans une glissière (14) et par son bord antérieur (15) dans une glissière (16). Ledit chariot (12) supporte en arrière un portique (21) et en avant un portique (25) selon la figure 2 et uniquement un portique (25) selon la figure 1
3°-Des engrenages Un engrenage plat (17) pivotant sur le chariot par l'axe (5) s'articule avec un engrenage de petite taille (18) lequel est jumelé à un troisième engrenage (19) de grande dimension avec lequel il partage un axe (20) pivotant en bas avec le chariot et en haut avec le portique (25) lequel collabore avec le chariot en bas et chevauche l'engrenage (19) en haut.
   Selon une caractéristique de l'invention, l'engrenage (17) est un engrenage conique coopérant avec un engrenage conique de renvoi positionnant ainsi verticalement l'engrenage (19) et réorientant la crémaillère, afin de réduire longitudinalement l'encombrement du système.
4°-Une crémaillère (23) collabore avec l'engrenage (19) à son zénit,.elle est soutenue par des guides (24) entre les butoirs (26) et coulisse dans sa glissière (11) laquelle est tributaire de la glissière (16)
5°-Un fléau (27) C'est une barre plate positionnée sous le véhicule tracteur selon son axe médian et longitudinal. Il pivotant à son extrémité antérieure sur la partie du chassis du véhicule tracteur correspondant au milieu de l'essieu arrière et à son extrémité postérieure sur l'axe (5) grâce à une lumière oblongue en forme de glissière (28), sous le bras d'attelage (2). Vers l'avant et à quelque distance de cet axe est situé un ergot vertical (29) dirigé en haut et destiné à occuper la glissière (30)

B- Une structure de support constituée par
un rectangle horizontal placé transversalement et constitué par des glissières (14 et 16) à ouverture intérieure et des entretoises (22) Il est destiné au coulissement du chariot (12) et comporte des éléments de fixation au chassis du véhicule tracteur
un carter composé d'un chapeau et d'un fond afin de protéger les parties mobiles au dessus et en dessous des glissières. Une ouverure adaptée est aménagée sur le fond pour permettre le déplacement de l'axe (5)

### FONCTIONNEMENT

Le dispositif anti-lacet est destiné à être placé sous l'arrière du véhicule tracteur et en particulier entre sa jupe arrière et la fosse de la roue de secours, de telle manière qu'il prenne la place du crochet d'attelage habituellement utilisé. La particularité essentielle de l'invention est la mobilité de ce dispositif dont les déplacements s'exercent a contrario de ceux imposés à la queue du véhicule tracteur en virage
Pour se faire, dans un premier temps, en trajectoire droite, le bras d'attelage et le fléau se trouvent en continuité l'un de l'autre, en effet l'ergot (29) est inclus dans la glissière (30) alors que l'axe (5) occupe l'extrémité antérieure de la glissière (28) Etant donné la rigidité latérale de l'accouplement de l'équipage, lorsque dans un deuxième temps, le véhicule tracteur vire, il entraine le dispositif d'attelage (1) et donc aussi le fléau. Le recoupement des axes longitudinaux du tracteur et de la remorque s'éffectue bien à l'aplomb du milieu de l'essieu arrière du tracteur. Le mouvement persiste jusqu'à ce que la crémaillère (23) entrainée par l'engrenage (19) vienne buter en fin de parcours dans sa glissière.(11) sur un butoir (26), alors que s'opère la disjonction de l'ergot (29) et de la glissière (30) La rotation du bras d'attelage se poursuit mais subit une translation médiane du fait du cheminement de l'engrenage (19) sur la crémaillère immobilisée qui le ramène en position médiane. A ce stade le bras est incliné sur l'axe longitudinal de la remorque au delà duquel il repousse le fléau faisant coincider l'axe (5) avec l'extrémité postérieure de la gouttière (30) Dans un troisième temps lorsque l'équipage se redresse, le bras d'attelage pivote et rétablit la jonction de l'ergot (29) et de la glissière (30) Ceci aboutit finalement à obtenirr une augmentation optimale de l'angle de virage sans débord de la remorque du fait de la réintégration du crochet d'attelage en position médiane
Ainsi se concrétisent les deux séquences de virage préconisées
1° séquence anti-lacet à grande vitesse avec angle de virage réduit
2° séquence de faible encombrement à vitesse réduite lors de virages importants

## Revendications

1. Système d'attelage anti-lacet articulé, **caractérisé en ce qu'**il comprend une partie mobile constituée par un mécanisme, et une partie fixe constituée par une structure de support, ledit mécanisme comportant:
- un bras d'attelage (2) constitué par une barre plate horizontale terminée à l'arrière par un crocher d'attelage (3) et à l'avant par un axe vertical (5), ledit crocher étant constitué par un élément vertical supportant un axe (4) transversal et horizontal constituant sa partie mâle, sur lequel s'appuie sa partie femelle (6) conformée en gouttière renversée et prolongée en bas par un dispositif de verrouillage (7), permettant audit crocher d'attelage de pivoter dans le sens vertical, mais de rester rigide latéralement, ladite partie femelle (6) pivotant sur un bareau coulissant (10) de la remorque, le dit bras (2) se prolongeant en avant de l'axe (5) de façon à pouvoir présenter une échancrure (30) en forme de glissière évasée à son extrémité;
- un chariot (12) constitué par une plaque horizontale et transversale coulissant par son bord postérieur (13) dans une glissière (14) et par son bord antérieur dans une glissière (16),ledit chariot (12) supportant un portique (21) et un portique (25) qui, chevauchant l'engrenages (19), collabore avec le chariot (12);
- des engrenages (17-18-19), l'engrenage (17), pivotant au dessus du chariot (12) sur l'axe (5), s'articulant avec l'engrenage (18) de petite taille, ce dernier étant jumelé à un troisième engrenage (19) de grande dimension;
- une crémaillère (23) collaborant avec l'engrenage (19) à son sommet antérieur, ladite crémaillère étant soutenue par des guides (24) entre les butoirs (26) et coulissant sur une glissière (11) tributaire de la glissière (16);
- un fléau (27) constitué d'une barre plate positionnée sous le véhicule tracteur selon son axe médian et longitudinal, ledit fléau (27) pivotant à son extrémité antérieure sur la partie du chassis du véhicule tracteur correspondant au milieu de l'essieu arrière, et à son extrémite arrière avec l'axe (5) grâce à une lumière oblongue en forme de glissière (28) sous le bras d'attelage (2), un ergot vertical (29) étant disposé vers l'avant , à quelque distance de cet axe (5), dirigé vers le haut, afin de pivoter dans la glissière (30);

2. Système selon la revendication n°1 **caractérisée en ce que** la structure de support est constituée par un rectangle horizontal placé transversalement, destiné au coulissement du chariot (12), et constitué par les glissières (14) et (16) à ouverture intérieure et des entretoises (22), ledit rectangle comportant des éléments de fixation au chassis du véhicule, la structure de support étant également constituée par la glissière (11);

3. Système selon l'une des revendications précédentes, **caractérisé en ce que** l'engrenage (17) est un engrenage plat

4. Système selon l'une des revendications 1 ou 2, **caractérisé en ce que** l'engrenage (17) est un engrenage conique coopérant avec un engrenage conique de renvoi, positionnant ainsi verticalement l'engrenage (19) et réorientant la crémaillère, afin de réduire longitudinalement l'encombrement du système.
